# EUROPÄISCHE PATENTANMELDUNG

(11) **EP 4 813 565 A1**
(43) Veröffentlichungstag der Anmeldung: **30.09.2026**
(21) Anmeldenummer: 25165776.3
(22) Anmeldetag: 24.03.2025
(51) Int. Cl.: B23Q 1/58, A61C 13/00, A61C 13/12, B23Q 7/10, B23Q 7/14

(54) **WERKSTÜCKTRÄGERWECHSELSYSTEM**

(71) Anmelder: Dental Concept Systems GmbH, 34399 Wesertal (DE)
(72) Erfinder: LEININGER, Matthias, 90469 Nürnberg (DE); FAULHABER, Katharina, 90469 Nürnberg (DE); REINS, Hartmut, 34399 Wesertal (DE)
(74) Vertreter: Hafner & Kohl PartmbB

(57) **Zusammenfassung**

Werkstückträgerwechselsystem (1) für eine materialentfernende Bearbeitungsanlage (2), insbesondere zur Herstellung von Dentalteilen, umfassend
- wenigstens einen Werkstückträger (3, 3'), an welchem zumindest temporär ein Werkstück (4) aufnehmbar ist,
- eine Vorratseinheit (5), die eingerichtet ist, wenigstens zwei Werkstückträger (3, 3') aufzunehmen, wobei die Vorratseinheit (5) eine Vertikalfördereinrichtung (6) umfasst, vermittels der wenigstens ein in der Vorratseinheit (5) aufgenommener Werkstückträger (3, 3') zwischen wenigstens einer Vorratsposition (7) und einer Übergabeposition (8) vertikal verlagerbar ist,
- eine Verlagerungseinheit (10) (weil diese nur verlagert und nicht bearbeitet), die eine mit einem Aufnahmebereich (11) zum temporären Aufnehmen eines Werkstückträgers (3) aufweisende Trageinrichtung (12) umfasst, wobei die Trageinrichtung (12) vermittels einer Linearfördereinrichtung (13) der Verlagerungseinheit (10) zwischen der Übergabeposition (8) und einer Bearbeitungsposition (9) linear verlagerbar ist, wobei
- an der Übergabeposition (8) ein Werkstückträger (3, 3') zwischen der Vorratseinheit (5) und der Verlagerungseinheit (10) übergebbar ist.

## Beschreibung

Die Erfindung betrifft ein Werkstückträgerwechselsystem für eine materialentfernende Bearbeitungsanlage, insbesondere zur Herstellung von Dentalteilen.

Entsprechende Werkstückträgerwechselsysteme sind aus dem Stand der Technik dem Grunde nach bekannt. So ist es beispielsweise bekannt, ein zu bearbeitendes Bauteil auf einen Bauteilträger zu fixieren und in dieser fixierten Form von einem Vorratsort zu einem Bearbeitungsort zu verlagern. Hierzu kann beispielsweise ein Roboterarm den am Vorratsort angeordneten Bauteilträger greifen und zu dem Bearbeitungsort bewegen. Nachteilig hierbei ist, dass eine exakte Ansteuerung des Roboterarms einen hohen Programmieraufwand sowie hohe Kosten mit sich bringt. Ferner ist die Positioniergenauigkeit und/oder die Prozessgeschwindigkeit limitiert.

Der Erfindung liegt die Aufgabe zugrunde, ein Werkstückträgerwechselsystem anzugeben, welches auf technisch einfache und zuverlässige Weise eine Übergabe eines Werkstückträgers zwischen einer Vorratseinheit und einer Bearbeitungsposition ermöglicht.

Die Aufgabe wird durch ein Werkstückträgerwechselsystem gemäß Anspruch 1 gelöst. Die hierzu abhängigen Ansprüche betreffen mögliche Ausführungsformen des Werkstückträgerwechselsystems. Ferner wird die Aufgabe durch einen Werkstückträger gemäß Anspruch 13 sowie durch eine Bearbeitungsanlage gemäß Anspruch 14 und ein Verfahren nach Anspruch 15 gelöst.

Die Erfindung betrifft ein Werkstückträgerwechselsystem für eine materialentfernende Bearbeitungsanlage, insbesondere zur Herstellung von Dentalteilen. Das Werkstückträgerwechselsystem weist wenigstens einen Werkstückträger auf, an welchem zumindest temporär ein Werkstück, insbesondere eine Rohlingscheibe, auch als Blank bezeichnet, aufnehmbar ist. Die Rohlingscheibe bildet beispielsweise ein Vollmaterial, aus welchem durch gezielten Materialabtrag, insbesondere vermittels eines spanenden Trennprozesses, ein Zielbauteil, insbesondere ein Dentalbauteil, gefertigt wird. Beispielsweise wird ein Fräswerkzeug eingesetzt, um aus der Rohlingscheibe ein Bauteil, insbesondere ein Dentalbauteil, herzustellen. Die Rohlingscheibe kann auch als

Das Werkstückträgerwechselsystem umfasst eine Vorratseinheit, die eingerichtet ist, wenigstens zwei Werkstückträger aufzunehmen, wobei die Vorratseinheit eine Vertikalfördereinrichtung umfasst, vermittels der wenigstens ein in der Vorratseinheit aufgenommener Werkstückträger zwischen wenigstens einer Vorratsposition und einer Übergabeposition vertikal verlagerbar ist. Die Vertikalfördereinrichtung kann beispielsweise eingerichtet sein, dass diese ausschließlich eine, insbesondere lineare, Bewegung in vertikaler Richtung ausführen kann. Beispielsweise ist die Vertikalfördereinrichtung nach Art eines Aufzugs ausgebildet, wobei die Vertikalfördereinrichtung wenigstens zwei, bevorzugt wenigstens drei, Aufnahmeeinrichtungen aufweist, die jeweils einen Auflegeabschnitt zum Auflegen eines Werkstückträgers umfassen. Die Vertikalfördereinrichtung ermöglicht es sonach, einen in der wenigstens einen Aufnahmeeinrichtung aufgenommenen Werkstückträger in vertikaler Richtung zu verlagern, d. h. den Werkstückträger wechselweise bzw. nach Bedarf, nach oben und nach unten zu bewegen. Die Bewegbarkeit des Werkstückträgers über die Vertikalfördereinrichtung ermöglicht ausschließlich eine vertikal ausgerichtete Verlagerungsbewegung von wenigstens einem, insbesondere von einer Vielzahl, innerhalb der Vorratseinheit aufgenommener Werkstückträger. Während der Bewegung wenigstens eines Werkstückträgers kann dieser von einer ersten Vorratsposition in die Übergabeposition und/oder von einer ersten Vorratsposition in eine weitere Vorratsposition verlagert werden. Beispielsweise weist die Vertikalfördereinrichtung übereinander gestapelte und/oder vertikal übereinander angeordnete Aufnahmeeinrichtungen auf, die, insbesondere ausschließlich, vertikalbeweglich innerhalb der Vorratseinheit verlagerbar sind. Bevorzugt sind wenigstens zwei Aufnahmeeinrichtungen der Vorratseinheit, die eingerichtet sind, jeweils zumindest einen Werkstückträger aufzunehmen, über einen, insbesondere gemeinsamen Aktor, vertikal verlagerbar. Beispielsweise werden die in einer ersten und wenigstens einer zweiten Aufnahmeeinrichtung aufgenommenen Werkstückträger über denselben Aktor und/oder ohne dass es dabei zu einer Abstandsveränderung der Aufnahmeeinrichtungen zueinander kommt, insbesondere ausschließlich, vertikal verlagert. Beispielsweise können wenigstens zwei Aufnahmeeinrichtungen über eine steife Verbindung miteinander gekoppelt sein bzw. derart miteinander verbunden sein, dass deren Abstand zueinander stets konstant bleibt.

Ferner umfasst das Werkstückträgerwechselsystem eine Verlagerungseinheit, die eine mit einem Aufnahmebereich zum temporären Aufnehmen eines Werkstückträgers aufweisende Trageinrichtung umfasst. Die Verlagerungseinheit umfasst eine Linearfördereinrichtung, insbesondere eine Horizontalfördereinrichtung, wobei die Trageinrichtung vermittels der Linearfördereinrichtung zwischen der Übergabeposition und einer Bearbeitungsposition linear verlagerbar ist. An der Übergabeposition ist ein Werkstückträger zwischen der Vorratseinheit und der Verlagerungseinheit übergebbar, d. h. der Werkstückträger kann an der Übergabeposition von einer Vorratseinheit an eine Verlagerungseinheit bzw. von einem Bereich der Vorratseinheit zu einem außerhalb der Vorratseinheit liegenden Bearbeitungsbereich bewegt werden.

Beispielsweise ist die materialentfernende Bearbeitungsanlage, auch Bearbeitungszentrum genannt, eine CNC-Maschine. So kann gestützt auf computergestützt erzeugten Daten, z. B. CAD-Daten, Steuerungsinformationen zur Ansteuerung der Bearbeitungsanlage verwendet werden. Beispielsweise kommt hierbei ein CAM-System (Computer-aided Manufacutring) zum Einsatz. Eine Werkzeugaufnahme bzw. eine Werkzeugschnittstelle, welche an einem freien Ende einer Spindel angeordnet ist, kann aktorgestützt zumindest zwischen einem Werkzeugmagazinbereich, an welchem gezielt ein an dem Werkzeugmagazin bevorratetes Werkzeug greifbar ist und einem Arbeitsbereich, an welchem, vermittels dem in der Werkzeugschnittstelle befindlichen Werkzeug eine materialabtragende Bearbeitung an einem am Arbeitsbereich gehaltenen Werkstück ausführbar ist.

Die Bearbeitungsanlage kann beispielsweise eingerichtet sein, fräsend und/oder bohrend und/oder schleifend und/oder schneidend auf ein Werkstück einzuwirken bzw. dieses entsprechend zu bearbeiten. Das mit der Bearbeitungsanlage zu bearbeitende Werkstück kann beispielsweise ein Dentalteil sein, also ein Bauteil das grundsätzlich der Zahntechnik zuzuordnen ist. Beispiele hierfür sind Zahnersatzbauteile, wie beispielsweise Zahnkronen, Brücken, Teil- und Vollprothesen, Inlays, kieferorthopädische Behandlungsgeräte, Knirscherschienen wie auch Schienen für Kieferbrüche oder Mundschutze für bestimmte Sportarten.

Beispielsweise besteht ein zu bearbeitendes Werkstück, insbesondere eine als Scheibe ausgebildeter Bearbeitungsrohling, beispielsweise aus einem Metall und/oder einer Keramik (z. B. Zirkonoxid) und/oder einem Kunststoff und/oder Wachs. Insbesondere kann das zu bearbeitende Werkstück aus einer Chrom-Cobalt-Legierung oder einer Chrom-Cobalt-Molybdän-Legierung bestehen. Optional kann das Werkstück aus einem thermoplastischen und/oder transparenten Kunststoff bestehen, z. B. Polymethylmethacrylat (PMMA). Auch eine Bearbeitung von aus Gold, Platin oder Titan bestehenden Werkstücken ist möglich. Das zu bearbeitende Werkstück kann beispielsweise eine standardisierte Form aufweisen, beispielsweise die Form einer runden, insbesondere kreisrunden, Scheibe. Derartige scheibenförmige Werkstücke können beispielsweise einen Durchmesser zwischen 80 mm und 120 mm, insbesondere 100 mm, aufweisen. Es ist möglich, dass die scheibenförmigen Werkstücke über deren Mantelfläche eine Stufe und/oder einen Absatz aufweisen.

Die Vertikalfördereinheit kann beispielsweise derart ausgeführt sein, dass diese eine einzige lineare Bewegungsmöglichkeit aufweist, d. h. nur eine Hin- und Herbewegung der Trageinrichtung entlang der Bewegungsachse aufweist. Mit anderen Worten wird die von der Vertikalfördereinrichtung bewegte Trägereinrichtung entlang einer geradlinigen Bewegungsachse bewegt. Optional kann die Vertikalfördereinheit zusätzlich zu der einen, insbesondere einzigen, linearen Bewegbarkeit um eine geradlinige Bewegungsachse zumindest eine Drehbarkeit um wenigstens eine Drehachse, bevorzugt um wenigstens zwei Drehachsen, besonders bevorzugt um wenigstens drei Drehachsen, aufweisen. Mit anderen Worten kann eine Drehbarkeit um wenigstens eine Raumachse, bevorzugt um wenigstens zwei zueinander senkrecht verlaufende Raumachsen, besonders bevorzugt um drei jeweils zueinander senkrecht verlaufende Raumachsen, ausführbar sein.

Es ist möglich, dass die vorratseinheitsseitige Vertikalfördereinrichtung eingerichtet ist, die wenigstens zwei Werkstückträger ausschließlich entlang einer vertikal verlaufenden Bewegungsachse zu verlagern. Damit kann die Vertikalfördereinrichtung nicht dazu eingerichtet sein, die von ihr getragenen Werkstückträger - mit Ausnahme der Vertikalrichtung - in eine weitere Raumrichtung translatorisch zu bewegen. Optional kann die Vertikalfördereinrichtung nicht dazu eingerichtet sein, die von ihr getragenen Werkstückträger zu drehen. Damit kann die Vorratseinheit und/oder die Vertikalfördereinrichtung einen technisch einfachen Aufbau aufweisen. Beispielsweise kann die Vorratseinheit und/oder die Vertikalfördereinrichtung einen einzigen Aktor für ein Bewegen des wenigstens einen Werkstückträgers aufweisen. Folglich kann ein mechanisch einfacher Aufbau und/oder eine einfache Steuerung der Vorratseinheit und/oder der Vertikalfördereinrichtung erreicht werden.

Die Verlagerungseinheit kann beispielsweise eine einen Drehaktor, d. h. einen Aktor zum Ausführen einer Drehbewegung eines Bauteils (hier: der Trageinrichtung), aufweisende Dreheinrichtung umfassen, vermittels der die Trageinrichtung um eine parallel und/oder koaxial zu einer (Linear-)Bewegungsachse der Linearfördereinrichtung verlaufenden Drehachse drehbar ist. Beispielsweise kann die Dreheinrichtung eingerichtet sein, dass eine erste Oberfläche der Trageinrichtung vor dem Ausführen eines dreheinrichtungsseitigen Drehens in eine erste Richtung weist und nach dem Ausführen des dreheinrichtungsseitigen Drehens eine zweite, der ersten Oberfläche gegenüberliegende Oberfläche der Trageinrichtung, in die erste Richtung weist. Mit anderen Worten weist zunächst eine erste Oberfläche des von der Trageinrichtung getragenen Werkstücks in eine erste Richtung und nach einem dreheinrichtungsseitigen Verdrehen der Trageinrichtung kann eine der ersten Oberfläche abgewandte Oberfläche des von der Trageinrichtung getragenen Werkstücks in die erste Richtung weisen. Folglich kann z. B. eine 180°-Drehung der Trageinrichtung und insbesondere eines von der Trageinrichtung getragenen Werkstücks durch die Dreheinrichtung ausgeführt werden. Die Dreheinrichtung kann beispielsweise eingerichtet sein, eine Drehung um einen beliebigen Winkel auszuführen. Allgemein kann durch die Dreheinrichtung die Trageinrichtung, und damit ein von der Trageinrichtung getragenes Werkstück in eine beliebige Winkelstellung zu einem Bearbeitungswerkzeug der Bearbeitungsanlage gedreht bzw. ausgerichtet werden. Der Drehaktor selbst kann eine drehende und/oder eine lineare Bewegung ausführen und mittelbar (z. B. über ein Getriebe bzw. eine Umlenkmechanik) oder unmittelbar die Trageinrichtung verdrehen bzw. kippen.

Die verlagerungseinheitsseitige Trageinrichtung kann beispielsweise eine einen Rotationsaktor aufweisende Rotationseinrichtung umfassen, vermittels der ein von der Trageinrichtung getragener Werkstückträger gezielt um eine Rotationsachse rotierbar ist. Als Rotationsaktor soll ein Aktor verstanden werden, der eine Rotationsbewegung mittelbar oder unmittelbar initiiert, d. h. z. B., dass der Aktor über ein (a) Getriebe oder eine Umlenkmechanik oder (b) direkt eine Rotationsbewegung bzw. eine Kippbewegung eines Bauteils (hier z. B. des Tragmittels der Trageinrichtung) ausführt. Hierbei kann der Rotationsaktor selbst eine und/oder eine Linearbewegung ausführen. Beispielsweise ist die Rotationsachse in einem Winkel, bevorzugt senkrecht, zur Drehachse und/oder in einem Winkel, bevorzugt senkrecht, zu einer linearen Bewegungsachse bzw. einer Förderrichtung der Vertikalfördereinrichtung ausgerichtet. Beispielsweise ist die Trageinrichtung nach Art einer mit zumindest einem Aktor für ein Verdrehen ausgestatteten kardanischen Lagerung ausgebildet. Dabei kann die Trageinrichtung eingerichtet sein, einen von der Trageinrichtung aufgenommenen Werkstückträger vermittels der Dreh- und Rotationseinrichtung, um die Rotations- und Drehachse zu drehen und/oder zu kippen. Bevorzugt wird dabei ein Verdrehen um zwei zueinander senkrecht ausgerichtete Achsen ermöglicht. Es ist möglich, dass zum Ausführen einer einfachen oder überlagerten Rotationsbewegung der Trageinrichtung, die Dreheinrichtung einen ersten Aktor und die Rotationseinrichtung einen weiteren Aktor aufweist, sodass die jeweiligen Rotationsbewegungen durch voneinander unabhängig ansteuerbare Aktoren initiiert werden bzw. initiierbar sind.

Die Trageinrichtung kann beispielsweise ein erstes, inneres, insbesondere U-förmigen, Tragmittel, z. B. Tragrahmen, und ein zweites, äußeres, insbesondere U-förmiges, Tragmittel, z. B. Tragrahmen, aufweisen, wobei der Werkstückträger von dem ersten, inneren Tragmittel getragen wird und das erste, innere Tragmittel von dem zweiten, äußeren Tragmittel getragen wird. Die beiden Tragmittel sind über wenigstens ein die Rotationsachse abbildendes Rotationsgelenk miteinander verbunden und über einen dem Rotationsgelenk zugeordneten Rotationsaktor, um die Rotationsachse verkipp- und/oder rotierbar. Die beiden Tragmittel sind gemeinsam über einen der Dreheinrichtung zugeordneten Drehaktor um die Drehachse aktiv dreh- und/oder kippbar. Insbesondere können über den der Rotationsachse zugeordneten Rotationsaktor und über den der Drehachse zugeordneten Drehaktor, ein aktives und gezielt erfolgendes Verkippen des von der Trageinrichtung getragenen Werkstückträgers ausgeführt werden.

Durch die nach Art einer kardanischen Lagerung ausgestaltete Kippbarkeit der Trageinrichtung und dadurch, dass ein definiertes Verkippen der Trageinrichtung (um wenigstens zwei Kippachsen) vermittels eines Aktors der Dreheinrichtung und vermittels eines Aktors der Rotationseinrichtung gezielt ausführbar ist, kann das in dem Werkstückträger aufgenommene Werkstück relativ zu einem, insbesondere vertikal ausgerichteten, Bearbeitungswerkzeug in eine gezielte Winkelausrichtung bewegt werden.

Die Vorratseinheit kann beispielsweise wenigstens zwei Aufnahmeeinrichtungen aufweisen, die jeweils einen Auflegeabschnitt zum Auflegen eines Werkstückträger aufweisen, wobei während eines an, d. h. z. B. auf, der Aufnahmeeinrichtung angeordneten Auflegezustands des Werkstückträgers, vermittels eines Ineinandergreifens einer Eingriffsstruktur und einer Gegeneingriffsstruktur eine, insbesondere horizontale, Bewegung des Werkstückträgers in Richtung der Bearbeitungsposition gesperrt bzw. verhindert wird. Beispielsweise weist die wenigstens eine Aufnahmeeinrichtung eine als Hervorhebung ausgebildete Eingriffsstruktur und der Werkstückträger eine als Ausnehmung zur Aufnahme der Hervorhebung ausgebildete Gegeneingriffsstruktur auf. Mit anderen Worten kann durch eine formschlüssige Verbindung von Werkstückträger und Aufnahmeeinrichtung eine Bewegung des Werkstückträgers entlang einer Horizontalachse, insbesondere entlang der Linearbewegungsachse des Linearförderers, unterbunden bzw. gesperrt werden. Bevorzugt wird ein Wegbewegen des Werkstückträgers von der Vorratseinheit bzw. ein trageinrichtungsgestütztes Bewegen, insbesondere Ziehen, des Werkstückträgers in Richtung der Bearbeitungsposition durch die ineinandergreifende Eingriffs- und Gegeneingriffsstruktur verhindert bzw. gesperrt. Mit anderen Worten kann im ineinandergreifenden Zustand von Eingriffs- und Gegeneingriffsstruktur eine formschlüssige Verbindung vorliegen, derart, dass der Werkstückträger nicht über eine Bewegung der Trageinrichtung aus der Übergabeposition bewegt, insbesondere herausgezogen, werden kann. Vorzugsweise weist die Vertikalfördereinrichtung übereinander gestapelte und/oder vertikal übereinander angeordnete Aufnahmeeinrichtungen auf, die, insbesondere ausschließlich, vertikalbeweglich innerhalb der Vorratseinheit verlagerbar sind.

In einer vorteilhaften Weiterbildung kann der Werkstückträger in einen Hebezustand überführbar sein, in welchem der Werkstückträger von dem Auflegeabschnitt der Aufnahmeeinrichtung angehoben bzw. beabstandet ist und dabei sich die Eingriffsstruktur und die Gegeneingriffsstruktur außer Eingriff befinden, derart, dass der Werkstückträger eine Relativbewegung zu der Aufnahmeeinrichtung in Richtung entlang bzw. parallel zu der Förderrichtung der Linearfördereinrichtung ausführen kann. Mit anderen Worten wird der Werkstückträger im Hebezustand von der Transporteinrichtung getragen und von dem Auflegeabschnitt der Aufnahmeeinrichtung beabstandet gehalten bzw. in einer relativ zum Auflegeabschnitt angehobenen Position gehalten. Sonach wird durch den Hebezustand bzw. durch die Beabstandung von Werkstückträger und Aufnahmeeinrichtung die Bewegungssperre für eine durch die Transporteinrichtung ausgeführte bzw. initiierte Bewegung des Werkstückträgers aufgehoben bzw. eine entsprechende Bewegbarkeit des Werkstückträgers ermöglicht.

Der wenigstens eine Werkstückträger kann beispielsweise durch die Vertikalfördereinrichtung zwischen dem Hebezustand und dem Auflegezustand überführbar sein. Beispielsweise wird der Werkstückträger vermittels der Vertikalfördereinrichtung von dem Auflegezustand in den Hebezustand überführt. Dadurch kann die Vertikalfördereinrichtung eine Doppelfunktion innehaben. Zunächst dient die Vertikalfördereinrichtung zur vertikalen Verlagerung der in der Vorratseinheit aufgenommenen Werkstückträger, um diese von einer ersten Vorratsposition in eine weitere Vorratsposition oder von einer ersten Vorratsposition in eine Übergabeposition zu verlagern. Ferner dient die Vertikalfördereinrichtung dazu, durch die gezielte vertikale Verlagerung des Werkstückträgers zwischen den dem Auflegezustand und den Hebezustand, die Sperrwirkung von Eingriffsstruktur und Gegeneingriffsstruktur zumindest temporär zu aktivieren und/oder aufzuheben. So kann z. B. die vertikalfördereinrichtungsseitige Tragfunktion für ein Tragen des Werkstückträgers, dadurch aufgehoben werden, dass zunächst die Transporteinrichtung in einen Eingriff mit dem Werkstückträger gelangt, insbesondere dadurch, dass die Transporteinrichtung vermittels der Linearfördereinrichtung an den Werkstückträger heranbewegt wird und mit diesem in Kontakt tritt. Dabei kann ein Eintauchen von einer transporteinrichtungsseitigen Tragstruktur in eine als Aufnahmeraum ausgebildete werkstückträgerseitige Gegentragstruktur erfolgen. Beispielsweise weist die Transporteinrichtung eine als wenigstens eine Hervorhebung ausgebildete Tragstruktur auf, die in eine als Aufnahmeraum ausgebildete Gegentragstruktur im Zuge des linearen Zusammenführens, eindringt. Sodann erfolgt eine vertikaleinrichtungsseitig initiierte Auseinanderfahrbewegung von Werkstückträger und Aufnahmeeinrichtung, sodass die Tragfunktion auf die Transporteinrichtung übergeht bzw. schließlich der Werkstückträger alleinig von der Transporteinrichtung getragen wird. Hierbei wird der Werkstückträger sodann über den Kontakt von Tragstruktur und Gegentragstruktur getragen.

Die Verlagerungseinheit kann beispielsweise eine Sperreinrichtung mit einem bewegbar gelagerten oder bewegbar ausgebildeten Sperrmittel aufweisen, wobei das Sperrmittel in einem Freigabezustand eine, insbesondere horizontal erfolgende, relative Bewegbarkeit von Trageinrichtung und einem in dem Aufnahmebereich der Trageinrichtung aufgenommenen Werkstückträger freigibt bzw. ermöglicht und in einem Sperrzustand eine relative Bewegbarkeit von Trageinrichtung und dem in dem Aufnahmebereich aufgenommenen Werkstückträger sperrt. Mit anderen Worten kann während eines Sperrzustands des Sperrmittels der Werkstückträger in dem Aufnahmebereich der Trageinrichtung fixiert werden und während eines Freigabezustands ein Herausbewegen des Werkstückträgers durch Einwirken einer äußeren Zug- und/oder Druckkraft aus dem Aufnahmebereich, z. B. vermittels der Transporteinrichtung, ermöglicht werden.

Die Bewegung des Sperrmittels zwischen einer Sperrposition des Sperrzustands und einer Freigabeposition des Freigabezustands kann beispielsweise auf einer geradlinigen Bewegungsachse erfolgen, wobei die Bewegungsachse der Bewegung zwischen Sperr- und Freigabezustand, beispielsweise horizontal ausgerichtet sein kann. Vorzugsweise ist die Bewegungsachse der Bewegung des Sperrmittels zwischen Sperr- und Freigabezustand im Wesentlichen (d. h. z. B. +/-20°, bevorzugt +/- 10°) senkrecht zu der linearen Bewegungsachse der Linearfördereinheit ausgerichtet. Optional können die Bewegungsachse der Bewegung des Sperrmittels zwischen Sperr- und Freigabezustand und die, insbesondere einzige, lineare Bewegungsachse der Linearfördereinrichtung in einer gemeinsamen Ebene liegen.

Es ist möglich, dass das Sperrmittel über einen (eigenen) Sperrmittelaktor angesteuert werden kann bzw. ansteuerbar ist, sodass das Sperrmittel durch Ansteuerung vermittels des Sperrmittelaktors in die Freigabeposition und/oder in die Sperrposition verlagerbar ist. Der Sperrmittelaktor ist als Aktor zu verstehen, der mittelbar oder unmittelbar das Sperrmittel zumindest abschnittsweise bewegt.

Die Sperreinrichtung kann optional ein Steuermittel umfassen, das mittelbar oder unmittelbar das Sperrmittel in den Sperrzustand und/oder in den Freigabezustand versetzt, wobei die Sperreinrichtung derart eingerichtet ist, dass der Sperrzustand und/oder der Freigabezustand in Abhängigkeit eines Kontakts und/oder eines nicht-Kontakts eines Kontaktabschnitts des Steuerungsmittels mit einem Gegenkontaktabschnitt der Vorratseinheit vorliegt. Beispielsweise besteht der Freigabezustand bei Vorliegen eines Kontakts des steuermittelseitigen Kontaktabschnitts mit einem vorratseinheitsseitigen Gegenkontaktabschnitts. Alternativ oder zusätzlich kann der Sperrzustand zumindest bei nicht Vorliegen eines Kontakts bzw. bei Beabstandung des Kontaktabschnitts und des Gegenkontaktabschnitts vorliegen. Das Steuermittel kann, insbesondere unmittelbar, das Sperrmittel in den Freigabezustand und/oder in den Sperrzustand versetzen. Mit anderen Worten kann das Sperrmittel, in Abhängigkeit (a) einer Position und/oder (b) einer Ausrichtung und/oder (c) einer elastischen Verformung (z. B. Biegung) des Steuermittels in dem Freigabezustand und/oder in dem Sperrzustand vorliegen oder bewegt werden. So kann das Steuermittel für das Sperrmittel den Freigabezustand und/oder den Sperrzustand vorgeben bzw. steuern. Bevorzugt weist jede Aufnahmeeinrichtung der Vorratseinheit jeweils einen Gegenkontaktabschnitt auf. Damit kann im Falle des Zusammenführens der Trageinrichtung mit einer Aufnahmeeinrichtung, das Sperrmittel diese Trageinrichtung über den Gegenkontaktabschnitt der für die Zusammenführung vorgesehenen Aufnahmeeinrichtung in den Freigabezustand überführen.

Die Sperreinrichtung kann in einer voreilhaften Ausführungsform ein Vorspannmittel umfassen, welches das Sperrmittel mit einer Vorspannkraft in den Sperrzustand und/oder in den Freigabezustand vorspannt. Vorzugsweise ist die Sperreinrichtung eingerichtet, dass bei Vorliegen eines Kontakts des steuerungsmittelseitigen Kontaktabschnitts und des vorratseinheitsseitigen Gegenkontaktabschnitts eine Freigabekraft, insbesondere eine Druckkraft, vorliegt, welche, insbesondere der Vorspannkraft entgegenwirkend, das Sperrmittel in den Freigabezustand versetzt bzw. bewegt. So kann z. B. das Sperrmittel durch die Vorspannkraft des Vorspannmittels in den Sperrzustand vorgespannt sein, wobei aufgrund der sich ergebenden Druckkraft an dem Kontakt von Kontaktabschnitt und Gegenkontaktabschnitt eine der Vorspannkraft entgegengerichtete und diese übersteigende Freigabekraft vorliegt.

Beispielsweise wird die Druckkraft, welche am Kontakt des steuermittelseitigen Kontaktabschnitts und dem vorratseinheitsseitigen Gegenkontaktabschnitt temporär vorherrscht, insbesondere ausschließlich, durch den Aktor der Verlagerungseinheit erzeugt, der die Bewegung des Werkstückträgers zwischen der Übergabeposition und der Bearbeitungsposition initiiert. Damit kann der Aktor der Verlagerungseinrichtung für das Überführen des Sperrmittels in den Sperr- und/oder Freigabezustand, insbesondere ausschließlich, genutzt werden, der auch, insbesondere ausschließlich, für die verlagerungseinrichtungsseitige Bewegung der Transporteinrichtung entlang der linearen Bewegungsachse verwendet wird.

Das Steuermittel kann vorzugsweise (a) im Freigabezustand des Sperrmittels in einem elastisch ausgelenkten Zustand vorliegen und/oder (b) im Sperrzustand des Sperrmittels in einem elastisch ausgelenkten Zustand vorliegen. Insbesondere kann im Freigabezustand eine höhere Rückstellkraft aufgrund des ausgelenkten Zustands des Steuermittels vorliegen als im Sperrzustand. Beispielsweise ist das Steuerungsmittel als, insbesondere ein aus einem Metall bestehender, Stab oder Streifen ausgebildet, der zum in den Freigabezustand zu gelangen (a) aus einem unverbogenen in einen elastisch verbogenen Zustand oder (b) aus einem in einem geringeren Grad elastisch gebogenen Zustand in einen in einem größeren Grad elastisch gebogenen Zustand überführt wird.

Es ist möglich, dass das Vorspannmittel und das Steuermittel einstückig ausgebildet sind bzw. ein einheitliches Bauteil ausbilden. So kann das Steuermittel im Sperrzustand des Sperrmittels beispielsweise in einem elastisch verbogenen Zustand vorliegen, wobei die Rückstellkraft des Steuermittels das Sperrmittel in eine Schließposition hin vorspannt, sodass aufgrund der Inneren Rückstellkraft des Steuermittels die Vorspannkraft bzw. die Vorspannfunktion des Vorspannmittels erreichbar ist.

Neben dem Werkstückträgerwechselsystem betrifft die Erfindung auch einen Werkstückträger für ein hierin beschriebenes Werkstückträgerwechselsystem. Der Werkstückträger umfasst eine Sperrmittelgegenstruktur, die eingerichtet ist, während einer eine Relativbewegung des Werkstückträger zur Trageinrichtung sperrenden Sperrposition eines Sperrmittels, das Sperrmittel in der Sperrmittelgegenstruktur zumindest abschnittsweise aufzunehmen, bevorzugt bilden während der Sperrposition des Sperrmittels, die Sperrmittelgegenstruktur und das in dieser zumindest abschnittsweise aufgenommene Sperrmittel eine kraftschlüssige Verbindung aus.

Ferner betrifft die Erfindung eine Bearbeitungsanlage zum materialentfernenden Bearbeiten eines Werkstücks, insbesondere zur Herstellung von Dentalteilen, mit einer Bearbeitungseinheit, umfassend wenigstens ein zumindest eine Schneide aufweisendes Werkzeug zum materialentfernenden Bearbeiten eines in einem Arbeitsbereich befindlichen Werkstücks, wobei die Bearbeitungsanlage ein hierin beschriebenes Werkstückträgerwechselsystem aufweist.

Auch betrifft die Erfindung ein Verfahren zum Wechsel eines Werkstückträgers unter Verwendung eines hierin beschriebenen Werkstückträgerwechselsystems.

Sämtliche Vorteile, Einzelheiten, Ausführungen und/oder Merkmale des erfindungsgemäßen Werkstückträgerwechselsystems sind auf den erfindungsgemäßen Werkstückträger und die erfindungsgemäße Bearbeitungsanlage und auf das erfindungsgemäße Verfahren übertragbar bzw. anzuwenden und umgekehrt.

Die Erfindung ist anhand von Ausführungsbeispielen in den Zeichnungen näher erläutert. Dabei zeigt:
Fig. 1 eine Prinzipdarstellung einer Bearbeitungsanlage gemäß einem Ausführungsbeispiel, wobei eine verlagerungseinheitsseitige Transporteinrichtung in der Bearbeitungsposition angeordnet;
Fig. 2 eine Prinzipdarstellung einer Bearbeitungsanlage gemäß Figur 1, wobei über eine vorratseinheitsseitige Vertikalfördereinrichtung ein auf einer Aufnahmeeinrichtung in einem Auflegezustand befindlicher Werkstückträger von einer Vorratsposition in eine Übergabeposition verlagert wurde;
Fig. 3 eine Prinzipdarstellung einer Bearbeitungsanlage gemäß Figur 2, wobei über eine verlagerungseinheitsseitige Linearfördereinrichtung die Transporteinrichtung in die Übergabeposition verlagert wurde;
Fig. 4 eine Prinzipdarstellung einer Bearbeitungsanlage gemäß Figur 3, wobei über die vorratseinheitsseitige Vertikalfördereinrichtung der mit der Transporteinrichtung in Kontakt stehende Werkstückträger von dem Auflegezustand in einen Hebezustand überführt wird (Abstand zwischen Werkstückträger und Aufnahmeeinrichtung;
Fig. 5 eine Prinzipdarstellung gemäß Figur 4, wobei die Transporteinrichtung vermittels der Linearfördereinrichtung von der Übergabeposition in die Bearbeitungsposition überführt wurde;
Fig. 6 eine Prinzipdarstellung gemäß Figur 5, wobei der in der Bearbeitungsposition befindliche Werkstückträger durch die Rotationseinrichtung in eine gekippten Ausrichtung überführt wurde;
Fig. 7 eine schematische Draufsicht auf eine Vorratseinheit und eine verlagerungseinheitsseitige Transporteinrichtung gemäß einem Ausführungsbeispiel.

Das Werkstückträgerwechselsystem 1 dient zum Einsatz in einer materialentfernenden Bearbeitungsanlage 2, insbesondere zur Herstellung von Dentalteilen. Das Werkstückträgerwechselsystem 1 umfasst wenigstens einen Werkstückträger 3, 3', an welchem zumindest temporär ein Werkstück 4, insbesondere eine Rohlingscheibe, auch als Blank bezeichnet, aufnehmbar ist. Typischerweise werden mehrere Werkstückträger 3, 3' in dem Werkstückträgerwechselsystem 1 eingesetzt bzw. sind dort vorgehalten, wobei die Werkstückträger 3, 3' jeweils ein Werkstück 4 aufnehmen bzw. halten. Damit kann durch das Handling und/oder die Verlagerung des wenigstens einen Werkstückträgers 3, 3' das durch diesen getragene Werkstück 4 innerhalb der Bearbeitungsanlage 2 gezielt positioniert und/oder ausgerichtet werden. Eine werkstückträgerwechselsystemseitige Vorratseinheit 5 ist eingerichtet, wenigstens zwei Werkstückträger 3, 3' aufzunehmen, wobei die Vorratseinheit 5 eine Vertikalfördereinrichtung 6 umfasst, vermittels der wenigstens ein in der Vorratseinheit 5 aufgenommener Werkstückträger 3, 3' zwischen wenigstens einer Vorratsposition 7 und einer Übergabeposition 8 vertikal verlagerbar ist. So kann die Vorratseinheit 5 beispielsweise eine Vielzahl an Vorratspositionen 7 umfassen, und folglich mehrere Werkstückträger 3, 3' aufnehmen und wechselweise einen definierten Werkstückträger 3, 3' gezielt von einer außerhalb der Übergabeposition 8 liegenden Vorratsposition 7 in die Übergabeposition 8 verlagern. Ebenso kann vermittels der Vertikalfördereinrichtung 6 ein in der Übergabeposition 8 befindlicher Werkstückträger 3, 3' in eine Vorratsposition 7 verlagert werden.

Ferner umfasst das Werkstückträgerwechselsystem 1 eine Verlagerungseinheit 10, die eine mit einem Aufnahmebereich 11 zum temporären Aufnehmen eines Werkstückträgers 3 aufweisende Trageinrichtung 12 umfasst. Die Verlagerungseinheit 10 weist eine Linearfördereinrichtung 13 auf, beispielsweise eine Horizontalfördereinrichtung, vermittels der der Werkstückträger 3, 3' zwischen der Übergabeposition 8 und einer Bearbeitungsposition 9 linear verlagerbar ist. An der Übergabeposition 8 ist ein Werkstückträger 3, 3' zwischen der Vorratseinheit 5 und der Verlagerungseinheit 10 übergebbar, d. h. z. B., dass die Haltefunktion für ein Halten des Werkstückträgers 3, 3' an der Übergabeposition 8 von der Vorratseinheit 5 an die Verlagerungseinheit 10 oder von der Verlagerungseinheit 10 an die Vorratseinheit 5 übergeben wird. Hierbei kann kurzzeitig ein Zwischenzustand vorliegen, in welchem der Werkstückträger 3, 3' von Vorrats- und Verlagerungseinheit 5, 10 gehalten wird bzw. sowohl die Vorratseinheit 5 als auch die Verlagerungseinheit 10 mit dem Werkstückträger 3, 3' in Kontakt steht.

Die Vertikalfördereinheit kann vorzugsweise einen technisch einfachen Aufbau aufweisen und derart ausgebildet sein, dass diese ausschließlich eine vertikal ausgerichtete Verlagerungsbewegung von wenigstens einem, insbesondere von einer Vielzahl, innerhalb der Vorratseinheit 5 aufgenommener Werkstückträger 3, 3' ausführt.

Beispielsweise weist die Vertikalfördereinrichtung 6 mehrere, übereinander angeordnete Aufnahmeeinrichtungen 19, 19' auf, die, insbesondere ausschließlich, vertikalbeweglich innerhalb der Vorratseinheit 5 verlagerbar sind. Hierbei können die einzelnen Aufnahmeeinrichtungen 19, 19' derart miteinander verbunden sein, dass deren Abstand stets konstant bleibt. Mit anderen Worten bilden die Aufnahmeeinrichtungen quasi Regalböden eines regalartigen Aufbaus, wobei die Regalböden gemeinsam und ohne dass sich eine Veränderung in deren Relativabständen ergibt, vertikal bewegt werden. In der Betrachtung als Regal kann damit beispielsweise das Regal als ganzes vertikal nach oben und unten verfahren werden kann. Es kann vorgesehen sein, dass die in einer ersten und wenigstens einer zweiten Aufnahmeeinrichtung 19, 19' aufgenommenen Werkstückträger 3, 3' über denselben Aktor und/oder ohne dass es zu einer Abstandsveränderung der Aufnahmeeinrichtungen 19, 19' zueinander kommt, insbesondere ausschließlich, vertikal verlagert werden.

Die Linearfördereinrichtung 13 kann beispielsweise eingerichtet sein, translatorische Bewegungen ausschließlich entlang einer einzigen Bewegungsachse ausführen zu können. Optional kann die Linearfördereinrichtung eingerichtet sein, zusätzlich zu der translatorischen Bewegung entlang einer einzigen Bewegungsachse, eine Drehung des von der verlagerungseinrichtungsseitigen Trageinrichtung 12 getragenen Werkstücks 4 auszuführen.

Die vorratseinheitsseitige Vertikalfördereinrichtung 6 kann eingerichtet sein, die wenigstens zwei Werkstückträger 3, 3' ausschließlich entlang einer vertikal verlaufenden Bewegungsachse 14 zu verlagern.

Die Verlagerungseinheit 10 kann beispielsweise eine einen Aktor aufweisende Dreheinrichtung 15 umfassen, vermittels der die Trageinrichtung 12 um eine parallel und/oder koaxial zu einer Bewegungsachse 14 der Linearfördereinrichtung 13 verlaufenden Drehachse 16 drehbar ist. Damit kann erreicht werden, dass durch Ansteuerung der Verlagerungseinheit 10 bzw. deren Aktor der Dreheinrichtung 15, ein definiertes Drehen bzw. Kippen der Trageinrichtung 12 und des durch die Trageinrichtung 12 getragenen Werkstückträgers 3 ausführbar ist. Beispielsweise ist die Dreheinrichtung 15 derart eingerichtet, dass eine erste Oberfläche der Trageinrichtung 12 vor dem Ausführen eines dreheinrichtungsseitigen Drehens in eine erste Richtung weist und nach dem Ausführen des dreheinrichtungsseitigen Drehens eine zweite, der ersten Oberfläche gegenüberliegende Oberfläche der Trageinrichtung 12, in die erste Richtung weist. Grundsätzlich sind vermittels des Aktors der Dreheinrichtung 15 beliebige Winkelstellungen der Trageinrichtung 12 und damit eines von der Trageinrichtung 12 getragenen Werkstückträgers 3 erreichbar. Bevorzugt ist die Dreheinrichtung 15 in der Linearfördereinrichtung 13 integriert, sodass vermittels der Linearfördereinrichtung 13 sowohl eine Bewegung entlang einer einzigen geradlinigen Bewegungsachse 14 und zusätzlich über die Dreheinrichtung 15 ein Verdrehen der Trageinrichtung 12 um diese einzige geradlinige Bewegungsachse 14 ausführbar ist. Diese Möglichkeit des gezielten Verdrehens der Trageinrichtung 12 vermittels der Dreheinrichtung 15 kann während einer materialabtragenden Bearbeitung des von dem Werkstückträger 3 gehaltenen Werkstücks 4 genutzt werden, um eine gezielte Ausrichtung, z. B. ein um einen definierten Winkel α (s. Doppelpfeil) erfolgendes Verkippen, zu erreichen.

Beispielsweise umfasst die verlagerungseinheitsseitige Trageinrichtung 12 eine wenigstens einen Rotationsaktor 38 aufweisende Rotationseinrichtung 17, vermittels der ein von der Trageinrichtung 12 getragener Werkstückträger 3, 3' gezielt um eine Rotationsachse 18 rotierbar ist. Die Rotationsachse 18 ist in einem Winkel β (s. Doppelpfeil) zu der Drehachse 16 ausgerichtet, sodass ein Verkippen und/oder Verdrehen des Werkstückträgers 3 über zwei unterschiedliche Achsen erfolgen kann. beispielsweise verläuft die Rotationsachse 18 senkrecht zur Drehachse 16 und/oder senkrecht zu einer Bewegungsachse 14 der Vertikalfördereinrichtung 6.

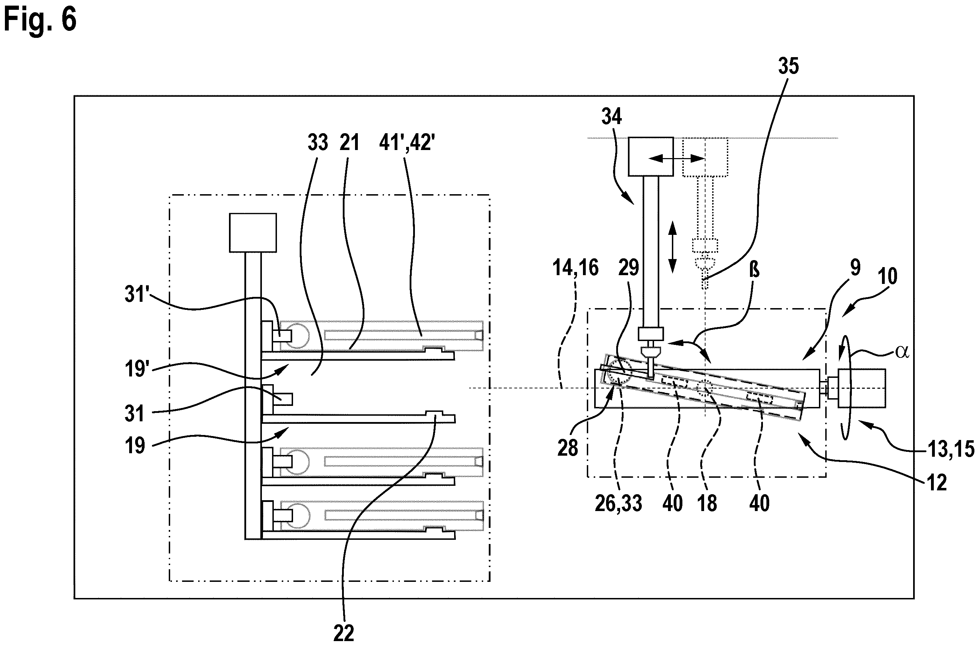

In der in Figur 6 gezeigten Ausführungsform umfasst die Trageinrichtung 12 ein erstes, insbesondere U-förmiges, Tragmittel 36, das um eine erste Achse drehbar ist und ein zweites, insbesondere U-förmiges, Tragmittel 37, das um eine zweite, senkrecht zur ersten Achse verlaufenden Achse drehbar ist. Hierbei kann das erste Tragmittel 36 drehbar an dem zweiten Tragmittel 37 und das zweite Tragmittel 37 an dem Drehaktor 39 befestigt sein. Die erste Achse kann beispielsweise der Rotationsachse 18 und die zweite Achse der Drehachse 16 entsprechen. Mit anderen Worten ist das erste Tragmittel 36, während sich die Trageinrichtung 12 zumindest in der Bearbeitungsposition befindet, ausschließlich mittelbar über das zweite Tragmittel 37 an einer übergeordneten Anlagenstruktur befestigt bzw. von dieser getragen. Über den Rotationsaktor 38 ist das erste Tragmittel 36 um die Rotationsachse 18 relativ zu dem zweiten Tragmittel 37 dreh bzw. schwenkbar und über den Drehaktor 39 ist das zweite Tragmittel 37 zusammen mit dem von diesem getragenen ersten Tragmittel 36 um die Drehachse 16 dreh- bzw. schwenkbar.

Die Trageinrichtung 12 kann - wie in Figur 6 gezeigt - nach Art einer mit Aktoren (Rotationsaktor 38 und Drehaktor 39) für ein Verdrehen ausgestatteten kardanischen Lagerung ausgebildet sein, wobei die Trageinrichtung 12 eingerichtet ist, einen von der Trageinrichtung 12 aufgenommenen Werkstückträger 3, 3' vermittels der Dreh- und Rotationseinrichtung 15, 17 um die Rotations- und Drehachse 18, 16 zu drehen und/oder zu kippen. Beispielsweise ist das erste Tragmittel 36 U-förmig ausgebildet und nimmt in seinem durch die U-Form umgrenzten Innenbereich einen Werkstückträger 3 auf. Das erste Tragmittel 36 wird von dem zweiten, ebenfalls U-förmig ausgebildeten Tragmittel 37 zumindest abschnittsweise umgriffen bzw. ist das erste Tragmittel 36 in einem durch die U-Form des zweiten Tragmittel 37 umgrenzten Innenbereich angeordnet. An dem zweiten Tragmittel 37, insbesondere an einem freien U-Schenkel des zweiten Tragmittels 37 kann ein Rotationsaktor 38 befestigt sein, der eingerichtet ist, eine um die Rotationsachse 18 ausführbare Dreh- und/oder Schenkbewegung des ersten Tragmittels 36 zu dem zweiten Tragmittel 37 auszuführen bzw. zu initiieren.

Durch die nach Art einer kardanischen Lagerung ausgestaltete Kippbarkeit der Trageinrichtung 12 und dadurch, dass ein definiertes Verkippen der Trageinrichtung 12 um wenigstens zwei Kippachsen vermittels eines Aktors (Drehaktor 39) der Dreheinrichtung 15 und vermittels eines Aktors (Rotationsaktor 38) der Rotationseinrichtung 18 gezielt ausführbar ist, kann das in dem Werkstückträger 3, 3' aufgenommene Werkstück 4 relativ zu einem, insbesondere vertikal ausgerichteten, Bearbeitungswerkzeug 35 in eine gezielte Winkelausrichtung um zumindest eine Asche, bevorzugt um zumindest zwei Achsen, gekippt werden.

Die Vorratseinheit 5 kann beispielsweise wenigstens zwei Aufnahmeeinrichtungen 19, 19' aufweisen, die jeweils einen Auflegeabschnitt 20 zum Auflegen eines Werkstückträger 3, 3' aufweisen, wobei während eines an der Aufnahmeeinrichtung 19, 19' angeordneten Auflegezustands 21 des Werkstückträgers 3, vermittels eines Ineinandergreifens einer Eingriffsstruktur 22 und einer Gegeneingriffsstruktur 23 eine, insbesondere horizontale, Bewegung des Werkstückträgers 3, 3' zumindest in Richtung der Bearbeitungsposition 9 gesperrt bzw. verhindert wird. Mit anderen Worten kann ein verlagerungseinrichtungsgestütztes Bewegen des mit der Verlagerungseinrichtung 10 in mechanischer Verbindung stehenden Werkstückträgers 3, insbesondere entlang der Bewegungsachse 14, verhindert bzw. geblockt werden. Beispielsweise weist die wenigstens eine Aufnahmeeinrichtung 19, 19' eine Eingriffsstruktur 22 und der Werkstückträger 3, 3' eine Gegeneingriffsstruktur 23 auf.

Der Werkstückträger 3, 3' kann beispielsweise in einen Hebezustand 24 (Beabstandungszustand) überführbar sein, in welchem der Werkstückträger 3, 3' von dem Auflegeabschnitt 20 der Aufnahmeeinrichtung 19, 19' angehoben bzw. beabstandet ist und dabei sich die Eingriffsstruktur 22 und die Gegeneingriffsstruktur 23 außer Eingriff befinden, derart, dass der Werkstückträger 3, 3', bevorzugt transporteinrichtungsgestützt, eine Relativbewegung zu der Aufnahmeeinrichtung 19, 19' in Richtung entlang bzw. parallel zu der Bewegungsachse 11 der Linearfördereinrichtung 13 ausführen kann.

Der wenigstens eine Werkstückträger 3, 3' kann beispielsweise durch die Vertikalfördereinrichtung 6 zwischen dem Hebezustand 24 und dem Auflegezustand 21 überführbar sein. So kann der Werkstückträger 3, 3' vermittels der Vertikalfördereinrichtung 6 von dem Auflegezustand in den Hebezustand 24 überführt werden. Damit kann die in die vertikale Richtung ermöglichte Förderfunktion der Vertikalfördereinrichtung 6 eine Doppelfunktion innehaben, einmal ein Ineingriffbringen und/oder Außereingriffbringen von Eingriffsstruktur 22 und Gegeneingriffsstruktur 23 und zudem ein Verlagern wenigstens eines Werkstückträgers 12 von einer ersten Vorratsposition in wenigstens eine zweite Vorratsposition und/oder von einer ersten Vorratsposition in eine Übergabeposition.

Die Verlagerungseinheit 10 kann beispielsweise eine Sperreinrichtung 25 mit einem bewegbar gelagerten oder bewegbar ausgebildeten Sperrmittel 26 aufweisen. In der dargestellten Ausführungsform ist das Sperrmittel 26 als Kugel ausgebildet, die im Sperrzustand mit einer Sperrmittelgegenstruktur 33 der Trageinrichtung 12 in Eingriff steht, bevorzugt taucht ein Abschnitt der Kugel in eine trageinrichtungsseitige, als Ausnehmung ausgebildete Sperrmittelgegenstruktur 33 ein. Das Sperrmittel 26 kann beispielsweise in einem Freigabezustand 27 eine, insbesondere horizontal erfolgende, relative Bewegbarkeit von Trageinrichtung 12 und einem in dem Aufnahmebereich 11 der Trageinrichtung 12 aufgenommenen Werkstückträger 3, 3' freigeben bzw. ermöglichen und in einem Sperrzustand 28, insbesondere vermittels Formschluss, eine relative Bewegbarkeit von Trageinrichtung 12 und dem in dem Aufnahmebereich 11 aufgenommenen Werkstückträger 3, 3' sperren bzw. verhindern. Ein Werkstückträger 3 kann vermittels einer werkstückträgerseitigen Linearlagerstruktur (z. B. Längsnut) linearbeweglich an der Trageinrichtung 12 über eine trageinrichtungsseitige Linearlagergegenstruktur (z. B. in wenigstens eine in die Längsnut aufnehmbare Hervorhebung) gelagert bzw. lagerbar sein. Die werkstückträgerseitige Linearlagerstruktur kann eine Gegentragstruktur 42, 42' bilden, welche beispielsweise als Ausnehmung, insbesondere als geradlinige und/oder horizontal ausgerichtete Längsnut, ausgebildet ist. Die in die Gegentragstruktur 42, 42' eingreifende trageinrichtungsseitige Tragstruktur 40 kann beispielsweise als wenigstens eine Hervorhebung, insbesondere als an wenigstens zwei unterschiedlichen Seiten eines zur Aufnahme des Werkstückträgers 3, 3' eingerichteten Aufnahmebereich 11 Diese grundsätzliche relative Linearbewegbarkeit von Werkstückträger 3 und Trageinrichtung 12 kann vermittels der Sperreinrichtung 25 zumindest temporär sperrbar sein.

Die Sperreichrichtung 25 kann ein Steuermittel 29 umfassen, das mittelbar oder unmittelbar das Sperrmittel 26 in den Sperrzustand 28 und/oder in den Freigabezustand 27 versetzt, wobei die Sperreinrichtung 25 derart eingerichtet ist, dass der Sperrzustand 28 und/oder der Freigabezustand 27 in Abhängigkeit eines Kontakts und/oder eines nicht-Kontakts eines Kontaktabschnitts 30 des Steuerungsmittels mit einem Gegenkontaktabschnitt 31 der Vorratseinheit 5 vorliegt. Beispielsweise ist der Gegenkontaktabschnitt 31 an wenigstens einer, insbesondere an sämtlichen, Aufnahmeeinrichtung(en) 19, 19' der Vorratseinheit 5 angeordnet oder ausgebildet. Der Freigabezustand 27 besteht vorzugsweise bei Vorliegen eines Kontakts des steuermittelseitigen Kontaktabschnitts 30 mit einem vorratseinheitsseitigen Gegenkontaktabschnitts 31 und/oder besteht der Sperrzustand 28 zumindest bei nicht Vorliegen eines Kontakts bzw. bei Beabstandung des Kontaktabschnitts 30 und des Gegenkontaktabschnitts 31. Das Steuermittel 29 versetzt durch dessen Bewegung das Sperrmittel 26 in den Freigabezustand 27 und/oder in den Sperrzustand 28, optional kann zumindest eine Bewegungsrichtung schwerkraftbedingt erfolgen, wobei das Steuermittel 29 durch dessen Freigabebewegung dem Sperrmittel 26 den Freiraum eröffnet, um, insbesondere schwerkraftbedingt, sich zumindest abschnittsweise in den Freiraum zu bewegen und damit auszuweichen und damit einen Freigabezustand für die Sperreinrichtung 25 zu erreichen. Mit anderen Worten meint dies, dass das Sperrmittel 26 in Abhängigkeit einer Position und/oder einer Ausrichtung und/oder einer elastischen Verformung, z. B. Biegung, des Steuermittels 29 in dem Freigabezustand 27 und/oder in dem Sperrzustand 28 vorliegt bzw. diesen einnimmt. So kann das Steuermittel 29 für das Sperrmittel 26 den Freigabezustand 27 und/oder den Sperrzustand 28 vorgeben.

Bevorzugt weist wenigstens eine Aufnahmeeinrichtung 19, 19', bevorzugt zumindest zwei Aufnahmeeinrichtungen 19, 19', besonders bevorzugt sämtliche Aufnahmeeinrichtungen 19, 19', der Vorratseinheit 5 jeweils einen Gegenkontaktabschnitt 31 auf. Damit kann im Falle des, bevorzugt verlagerungseinheitsseitigen, besonders bevorzugt linearfördereinrichtungsseitigen, Zusammenführens einer Trageinrichtung 12 mit einer Aufnahmeeinrichtung 19, 19', das Sperrmittel 26 dieser Trageinrichtung 12, durch den Kontakt des aufnahmeeinrichtungsseitigen Gegenkontaktabschnitts 31 mit dem steuerungsmittelseitigen Kontaktabschnitt 30 in den Freigabezustand 27 überführt werden. Hierbei kann eine Druckkraft zwischen dem Gegenkontaktabschnitt 31 und dem Kontaktabschnitt 30 wirken.

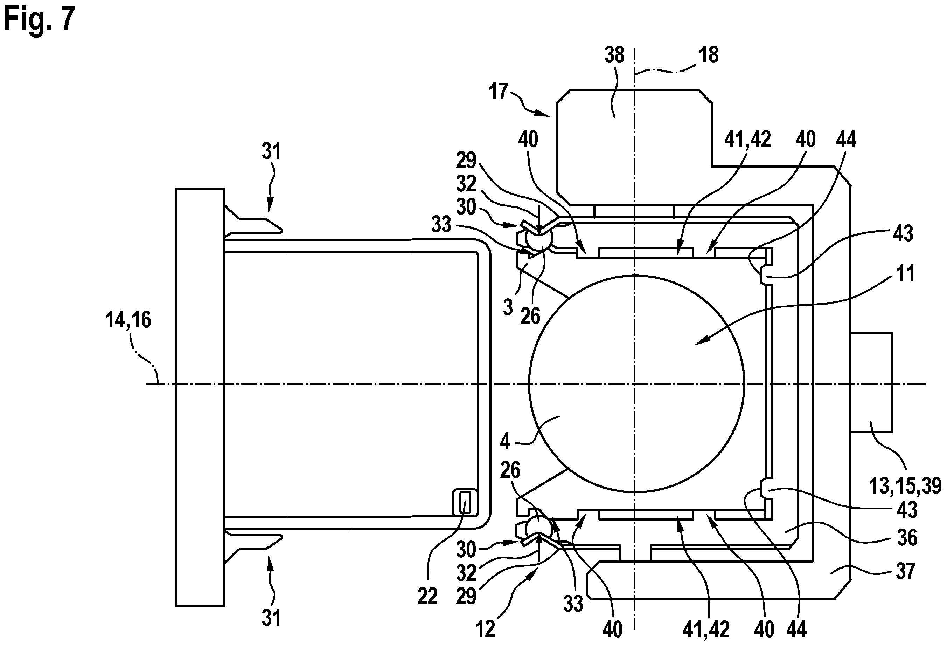

Der Gegenkontaktabschnitt 31 kann beispielsweise als Zapfen oder als Hervorhebung ausgebildet sein. Vorzugsweise weist der Gegenkontaktabschnitt 31 zwei, im zusammengefahrenen Zustand das Sperrmittel oberseitig und unterseitig umgreifende Hervorhebungen auf. Mit anderen Worten erstreckt sich die Haupterstreckungsebene der Trageinrichtung in die X-Y-Ebene, sodass ein Sperrmittel 26 von zumindest einem Gegenkontaktabschnitt 31 entlang der Z-Richtung beidseitig, d. h. z. B. oberhalb und unterhalb, von einer gegenkontaktabschnittseitigen Hervorhebung umgriffen wird, um das Steuermittel mit einer definierten, und insbesondere nahe an dem Sperrmittel 26 liegenden, Druckkraft zu beaufschlagen. In der Figur 7 kann eine Aufnahmeeinrichtung 19, 19' vier gegenkontaktabschnittseitige Hervorhebungen aufweisen, wobei paarweise die beiden Sperrmittel 26 jeweils in Z-Richtung beidseitig umgriffen werden.

Es ist möglich, dass die Sperreinrichtung 25 ein Vorspannmittel umfasst, welches das Sperrmittel 26 mit einer Vorspannkraft 32 in den Sperrzustand 28 und/oder in den Freigabezustand 27 vorspannt. Beispielsweise ist die Sperreinrichtung 25 derart eingerichtet, dass bei Vorliegen eines Kontakts des steuerungsmittelseitigen Kontaktabschnitts 30 und des vorratseinheitsseitigen Gegenkontaktabschnitts 31 30 eine Freigabekraft, insbesondere eine Druckkraft, vorliegt, welche, insbesondere der Vorspannkraft 32 entgegenwirkend, das Sperrmittel 26 in den Freigabezustand 27 versetzt bzw. überführt. Beispielsweise ist das Sperrmittel 26 durch die Vorspannkraft 32 des Vorspannmittels in den Sperrzustand 28 vorgespannt, wobei aufgrund der sich ergebenden Druckkraft an dem Kontakt von Kontaktabschnitt 30 und Gegenkontaktabschnitt 31 eine der Vorspannkraft 32 entgegengerichtete und diese übersteigende Freigabekraft vorliegt, sodass das Steuermittel 29 bzw. das Sperrmittel 26 im Freigabezustand 27 vorliegt. Es ist möglich, dass die Druckkraft, welche am Kontakt des steuermittelseitigen Kontaktabschnitts 30 und dem vorratseinheitsseitigen Gegenkontaktabschnitt 31 vorherrscht, insbesondere ausschließlich, durch den Aktor der Verlagerungseinheit 10 erzeugt wird, der die Bewegung des Werkstückträgers 3 zwischen der Übergabeposition 8 und der Bearbeitungsposition 9 initiiert.

Das Steuermittel 29 kann beispielsweise (a) im Freigabezustand 27 des Sperrmittels 26 in einem elastisch ausgelenkten Zustand und/oder (b) im Sperrzustand 28 des Sperrmittels 26 in einem elastisch ausgelenkten Zustand vorliegen. Beispielsweise liegt im Freigabezustand 27 des Sperrmittels 26 eine höhere Rückstellkraft aufgrund des ausgelenkten Zustands des Steuermittels 29 vor als im Sperrzustand 28. In der dargestellten Ausführungsform sind das Vorspannmittel und das Steuermittel 29 einstückig ausgebildet bzw. bilden ein einheitliches Bauteil aus. Dieses Bauteil kann beispielsweise als elastischer Stab oder elastisches Band, insbesondere aus Metall bestehend, ausgebildet sein.

Der Werkstückträger 3, 3' kann beispielsweise eine Sperrmittelgegenstruktur 33 umfassen, die eingerichtet ist, während einer Sperrposition des trageinrichtungsseitigen Sperrmittels 26 eine Relativbewegung von Werkstückträger 3, 3' und Trageinrichtung 12 zu sperren bzw. zu hemmen. Während des Freigabezustands 27 der Sperreinrichtung 25 kann das Sperrmittel 26 eine formschlüssige Verbindung mit der Sperrmittelgegenstruktur 33 ausbilden, insbesondere in eine Ausnehmung eingreifen.

Neben dem Werkstückträgerwechselsystem 1 umfasst die Erfindung eine Bearbeitungsanlage 2 zum materialentfernenden Bearbeiten eines Werkstücks 4, insbesondere zur Herstellung von Dentalteilen, mit einer Bearbeitungseinheit 34 umfassend wenigstens ein Werkzeug 35 zum materialentfernenden Bearbeiten eines in einem Arbeitsbereich befindlichen Werkstücks 4. Das Werkzeug 35 kann beispielsweise ein Schleif- und/oder Fräs- und/oder Bohr- und/oder Schneidwerkzeug sein. Die Bearbeitungsanlage 2 umfasst ein hierin beschriebenes Werkstückträgerwechselsystem 1. Ferner umfasst die Erfindung ein Verfahren zum Wechsel eines Werkstückträgers 3 unter Verwendung eines hierin beschriebenen Werkstückträgerwechselsystems 1.

Es ist möglich, dass die Trageinrichtung 12, insbesondere ein erstes bzw. inneres, den Aufnahmebereich 11 begrenzendes Tragmittel 36, einen Zentrieranschlag 43 aufweist. Der Zentrieranschlag 43 führt zu einer Zentrierung und zu einer Begrenzung des in den Aufnahmebereich 11 der Trageinrichtung 12 eingeführten bzw. aufgenommenen Werkstückträger 3, 3'. Der Werkstückträger 3, 3' weist hierzu einen Gegenzentrieranschlag 44 auf, bevorzugt korrespondieren Zentrieranschlag 43 und Gegenzentrieranschlag 44. In einer Bevorzugten Ausführungsform führt das, insbesondere als Kugel ausgebildete, Sperrmittel 26 eine im aufgenommenen Zustand von Werkstückträger 3, 3' und Trageinrichtung 12 Druckkraft an dem Zentrier- und Gegenzentrieranschlag 43, 44 aus. Damit kann eine sperrmittelinitiierte Sicherung bzw. eine sperrmittelinitiierte kraftschlüssige Spielverhinderung zwischen Werkstückträger 3, 3' und Trageinrichtung 12 ermöglicht werden.

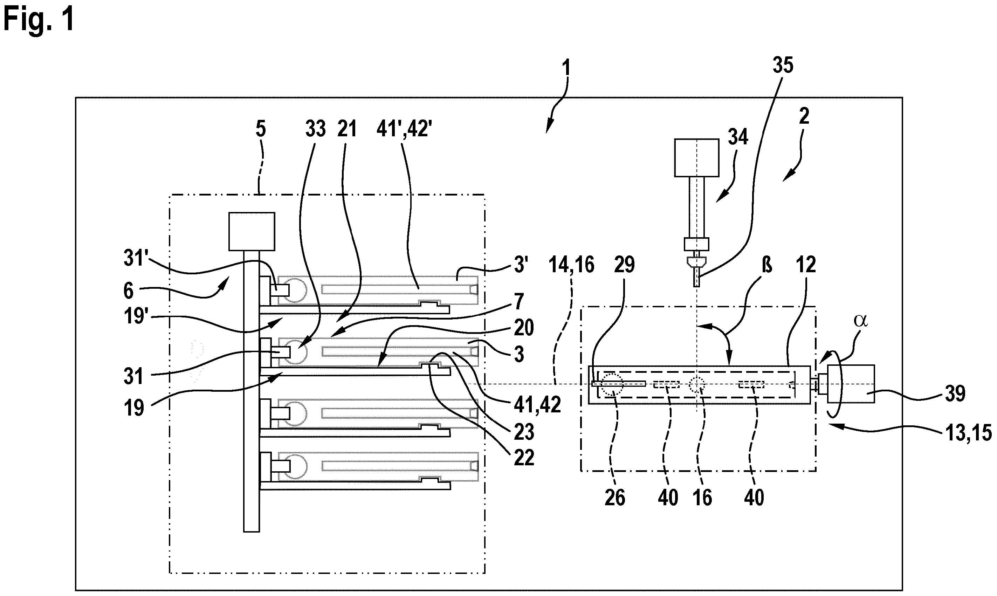

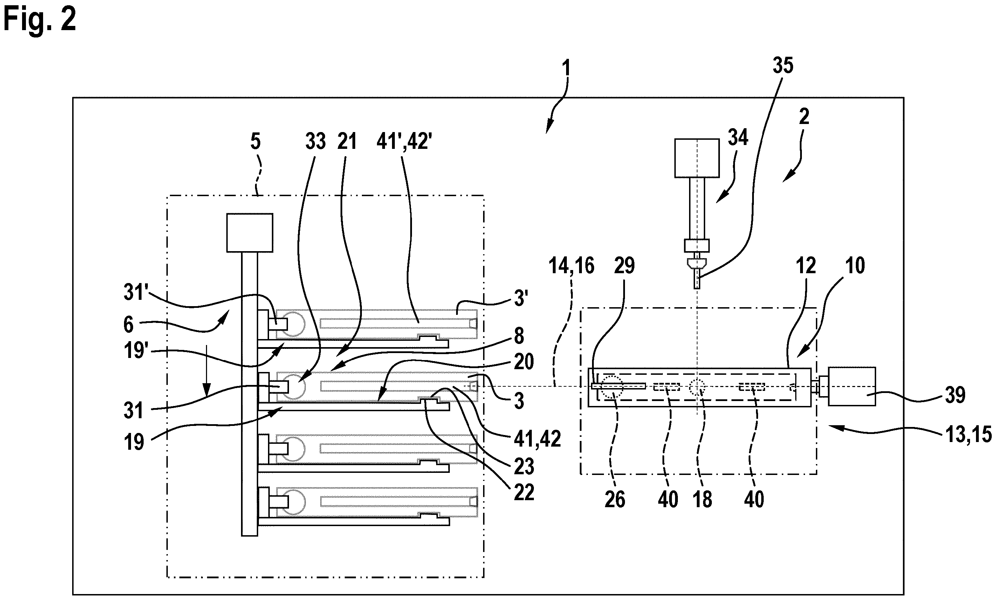

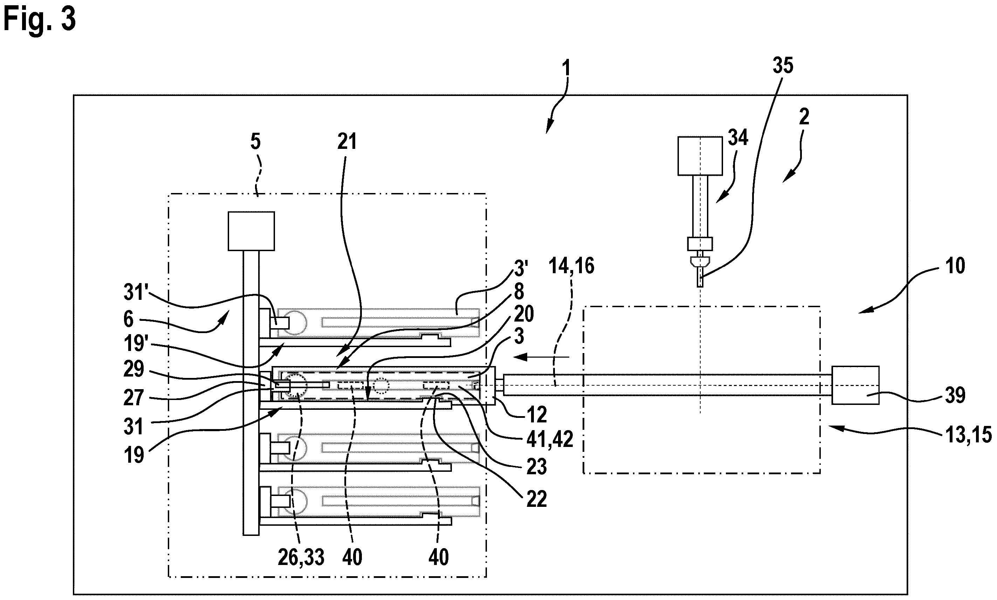

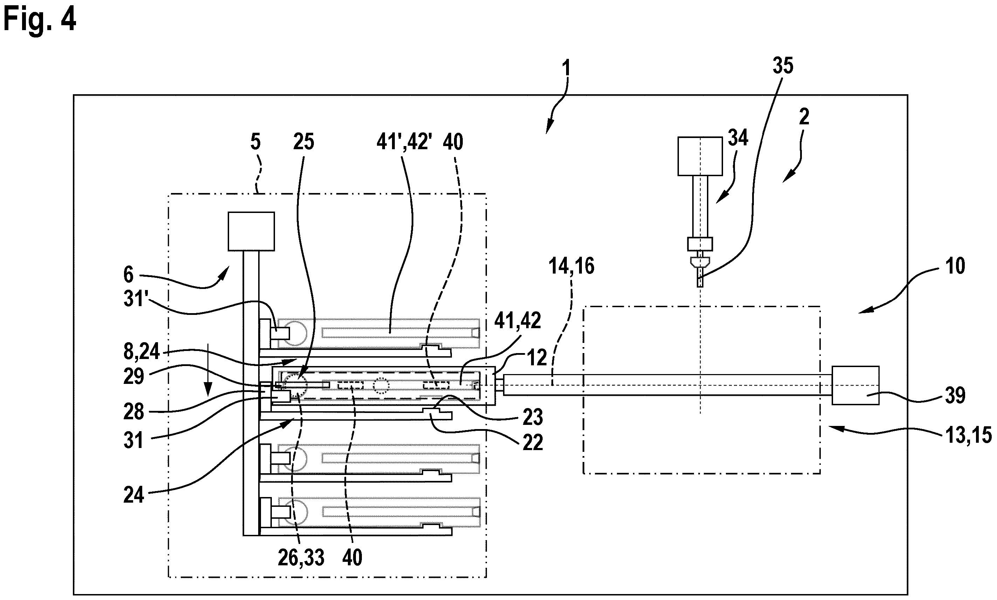

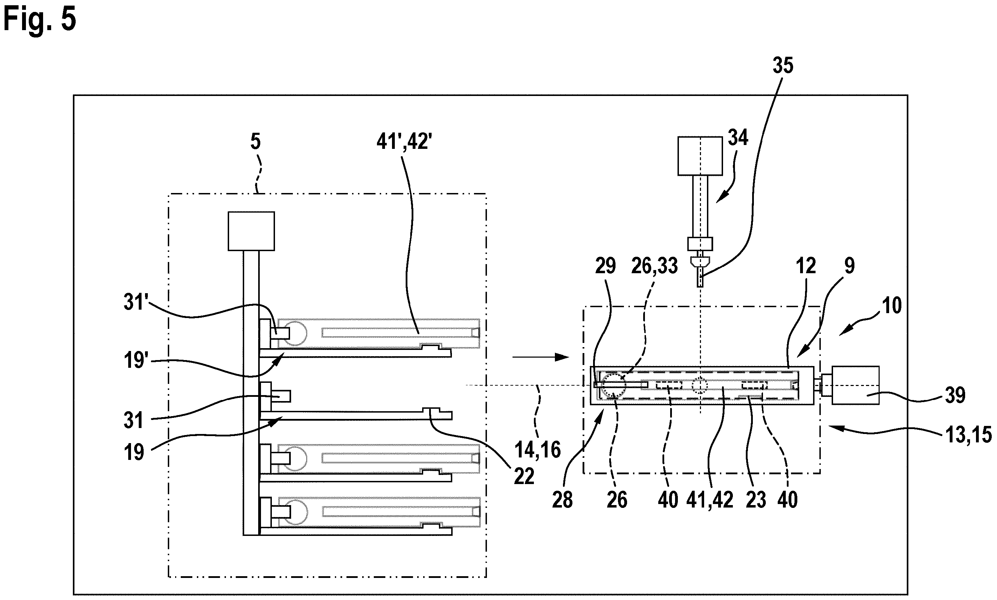

In einer Zusammenschau der Figuren 1 bis 6 ist ersichtlich, dass über die Linearfördereinrichtung 13 die Trageinrichtung 12 von der Bearbeitungsposition 9 in die Übergabeposition 8 verlagert wird, vgl. Figur 3. Hierzu führt die Trageinrichtung 12 eine lineare Bewegung entlang der Bewegungsachse 14 aus. Hierbei erfolgt ein Verrasten der Trageinrichtung 12 vermittels der Sperrmittel 26 an dem vorratseinheitsseitig durch die Aufnahmeeinrichtung 19 gehaltenen Werkstückträger 3. Das Verrasten wird hier beispielsweise durch das als Kugel ausgebildete Sperrmittel 26 erreicht, das während der, insbesondere ausschließlichen, Linearbewegung der Trageinrichtung 12 relativ zu dem Werkstückträger 3 erreicht wird. Danach wird die Aufnahmeeinrichtung 19 durch die Vertikalfördereinrichtung 6 in eine Beabstandungsposition verfahren, sodass angehobener Zustand des Werkstückträgers 3 von der Aufnahmeeinrichtung 19 erreicht wird (Hebezustand 24) und damit die Eingriffsstruktur 22 und Gegeneingriffsstruktur 23 außer Eingriff gehen. Und damit durch die Verrastung des Sperrmittels 24 an dem, Werkstückträger 3, während eines Zurückbewegens der Trageinrichtung 12 von der Übergabeposition 8 in die Bearbeitungsposition 9, der Werkstückträger 3 mitgenommen wird. Wenn ein trageinrichtungsseitig getragener Werkstückträger 3 in die Vorratseinheit 5 aufzunehmen ist, erfolgt eine Ansteuerung in umgekehrter Weise, sodass zunächst die gewünschte Aufnahmeeinrichtung 19, 19' in eine unterhalb der Bewegungsebene, welche auch die Bewegungsachse 14 umfasst, liegende Vorbereitungsposition, vgl. Figur 5, verbracht wird. Danach wird die Trageinrichtung 12 vermittels der Linearfördereinrichtung 13 in die Übergabeposition 8 verfahren und danach die Aufnahmeeinrichtung 19 von unten nach oben an den trageinrichtungsseitig getragenen Werkstückträger 3 angesetzt. Hierbei kann eine Verlagerung des Sperrmittels 26 von dem Sperrzustand 28 in den Freigabezustand 27 erfolgen. Sodass durch ein Zurückfahren der Trageinrichtung 12 in die Bearbeitungsposition 9, der Werkstückträger 3 an der Aufnahmeeinrichtung 19 verbleibt, da die aufnahmeeinrichtungsseitige Eingriffsstruktur 22 die werkstückträgerseitige Gegeneingriffsstruktur 23 zurückhält bzw. der Werkstückträger 3 die Zurückbewegung der Trageinrichtung 12 nicht "mitgehen" kann.

### BEZUGSZEICHENLISTE

- 1: Werkstückträgerwechselsystem
- 2: Bearbeitungsanlage
- 3, 3': Werkstückträger
- 4: Werkstück
- 5: Vorratseinheit
- 6: Vertikalfördereinrichtung
- 7: Vorratsposition
- 8: Übergabeposition
- 9: Bearbeitungsposition
- 10: Verlagerungseinheit
- 11: Aufnahmebereich von 12
- 12: Trageinrichtung von 10
- 13: Linearfördereinrichtung
- 14: Bewegungsachse von 13
- 15: Dreheinrichtung
- 16: Drehachse von 15
- 17: Rotationseinrichtung
- 18: Rotationsachse von 17
- 19, 19': Aufnahmeeinrichtung von 5
- 20: Auflegeabschnitt von 19, 19'
- 21: Auflegezustand
- 22: Eingriffsstruktur von 19, 19'
- 23: Gegeneingriffsstruktur von 3
- 24: Hebezustand
- 25: Sperreinrichtung
- 26: Sperrmittel
- 27: Freigabezustand von 25
- 28: Sperrzustand von 25
- 29: Steuermittel
- 30: Kontaktabschnitt von 29
- 31: Gegenkontaktabschnitt von 5
- 32: Vorspannkraft
- 33: Sperrmittelgegenstruktur
- 34: Bearbeitungseinheit
- 35: Werkzeug
- 36: erstes Tragmittel von 12
- 37: zweites Tragmittel von 12
- 38: Rotationsaktor
- 39: Drehaktor
- 40: Tragstruktur von 12
- 41, 41': Aufnahmeraum von 42
- 42, 42': Gegentragstruktur von 3, 3'
- 43: Zentrieranschlag von 12
- 44: Gegenzentrieranschlag von 3, 3'

## Patentansprüche

1. Werkstückträgerwechselsystem (1) für eine materialentfernende Bearbeitungsanlage (2), insbesondere zur Herstellung von Dentalteilen, umfassend
- wenigstens einen Werkstückträger (3, 3'), an welchem zumindest temporär ein Werkstück (4) aufnehmbar ist,
- eine Vorratseinheit (5), die eingerichtet ist, wenigstens zwei Werkstückträger (3, 3') aufzunehmen, wobei die Vorratseinheit (5) eine Vertikalfördereinrichtung (6) umfasst, vermittels der wenigstens ein in der Vorratseinheit (5) aufgenommener Werkstückträger (3, 3') zwischen wenigstens einer Vorratsposition (7) und einer Übergabeposition (8) vertikal verlagerbar ist,
- eine Verlagerungseinheit (10), die eine mit einem Aufnahmebereich (11) zum temporären Aufnehmen eines Werkstückträgers (3) aufweisende Trageinrichtung (12) umfasst, wobei die Trageinrichtung (12) vermittels einer Linearfördereinrichtung (13) der Verlagerungseinheit (10) zwischen der Übergabeposition (8) und einer Bearbeitungsposition (9) linear verlagerbar ist, wobei
- an der Übergabeposition (8) ein Werkstückträger (3, 3') zwischen der Vorratseinheit (5) und der Verlagerungseinheit (10) übergebbar ist.

2. Werkstückträgerwechselsystem (1) nach Anspruch 1, **dadurch gekennzeichnet, dass** die vorratseinheitsseitige Vertikalfördereinrichtung (6) eingerichtet ist, die wenigstens zwei Werkstückträger (3, 3') ausschließlich entlang einer vertikal verlaufenden Bewegungsachse (14) zu verlagern.

3. Werkstückträgerwechselsystem (1) nach Anspruch 1 oder 2, **dadurch gekennzeichnet, dass** die Verlagerungseinheit (10) eine einen Aktor aufweisende Dreheinrichtung (15) umfasst, vermittels der die Trageinrichtung (12) um eine parallel und/oder koaxial zu einer Bewegungsachse (14) der Linearfördereinrichtung (13) verlaufenden Drehachse (16) drehbar ist, bevorzugt kann die Dreheinrichtung (15) eingerichtet sein, dass eine erste Oberfläche der Trageinrichtung (12) vor dem Ausführen eines dreheinrichtungsseitigen Drehens in eine erste Richtung weist und nach dem Ausführen des dreheinrichtungsseitigen Drehens eine zweite, der ersten Oberfläche gegenüberliegende Oberfläche der Trageinrichtung (12), in die erste Richtung weist.

4. Werkstückträgerwechselsystem (1) nach einem der vorhergehenden Ansprüche, **dadurch gekennzeichnet, dass** die verlagerungseinheitsseitige Trageinrichtung (12) eine wenigstens einen Rotationsaktor aufweisende Rotationseinrichtung (17) umfasst, vermittels der ein von der Trageinrichtung (12) getragener Werkstückträger (3, 3') gezielt um eine, bevorzugt senkrecht zur Drehachse (16) und/oder senkrecht zu einer Bewegungsachse (14) der Vertikalfördereinrichtung (6) verlaufende, Rotationsachse (18) rotierbar ist.

5. Werkstückträgerwechselsystem (1) nach Anspruch 3 und 4, **dadurch gekennzeichnet, dass** die Trageinrichtung (12) nach Art einer mit Aktoren für ein Verdrehen ausgestatteten kardanischen Lagerung ausgebildet ist, wobei die Trageinrichtung (12) eingerichtet ist, einen von der Trageinrichtung (12) aufgenommenen Werkstückträger (3, 3') vermittels der Dreh- und Rotationseinrichtung (18) um die Rotations- und Drehachse (16) zu drehen und/oder zu kippen.

6. Werkstückträgerwechselsystem (1) nach einem der vorhergehenden Ansprüche, **dadurch gekennzeichnet, dass** die Vorratseinheit (5) wenigstens zwei Aufnahmeeinrichtungen (19, 19') aufweist, die jeweils einen Auflegeabschnitt (20) zum Auflegen eines Werkstückträger (3, 3') aufweisen, wobei während eines an der Aufnahmeeinrichtung (19, 19') angeordneten Auflegezustands (21) des Werkstückträgers (3), vermittels eines Ineinandergreifens einer Eingriffsstruktur (22) und einer Gegeneingriffsstruktur eine, insbesondere horizontale, Bewegung des Werkstückträger (3, 3') in Richtung der Bearbeitungsposition (9) gesperrt bzw. verhindert wird, vorzugsweise weist die wenigstens einen Aufnahmeeinrichtung (19, 19') eine Eingriffsstruktur (22) und der Werkstückträger (3, 3') eine Gegeneingriffsstruktur auf.

7. Werkstückträgerwechselsystem (1) nach Anspruch 6, **dadurch gekennzeichnet, dass** der Werkstückträger (3, 3') in einen Hebezustand (24) überführbar ist, in welchem der Werkstückträger (3, 3') von dem Auflegeabschnitt (20) der Aufnahmeeinrichtung (19, 19') angehoben ist und dabei sich die Eingriffsstruktur (22) und die Gegeneingriffsstruktur (23) außer Eingriff befinden, derart, dass der Werkstückträger (3, 3'), bevorzugt transporteinrichtungsgestützt, eine Relativbewegung zu der Aufnahmeeinrichtung (19, 19') in Richtung entlang bzw. parallel zu der Bewegungsachse (11) der Linearfördereinrichtung (13) ausführen kann.

8. Werkstückträgerwechselsystem (1) nach Anspruch 7, **dadurch gekennzeichnet, dass** der wenigstens eine Werkstückträger (3, 3') durch die Vertikalfördereinrichtung (6) zwischen dem Hebezustand (24) und dem Auflegezustand (21) überführbar ist, insbesondere wird der Werkstückträger (3, 3') vermittels der Vertikalfördereinrichtung (6) von dem Auflegezustand in den Hebezustand (24) überführt.

9. Werkstückträgerwechselsystem (1) nach einem der vorhergehenden Ansprüche, **dadurch gekennzeichnet, dass** die Verlagerungseinheit (10) eine Sperreinrichtung (25) mit einem bewegbar gelagerten oder bewegbar ausgebildeten Sperrmittel (26), wobei das Sperrmittel (26) in einem Freigabezustand (27) eine, insbesondere horizontal erfolgende, relative Bewegbarkeit von Trageinrichtung (12) und einem in dem Aufnahmebereich (11) der Trageinrichtung (12) aufgenommenen Werkstückträger (3, 3') freigibt bzw. ermöglicht und in einem Sperrzustand (28) eine relative Bewegbarkeit von Trageinrichtung (12) und dem in dem Aufnahmebereich (11) aufgenommenen Werkstückträger (3, 3') sperrt.

10. Werkstückträgerwechselsystem (1) nach Anspruch 9, **dadurch gekennzeichnet, dass** die Sperreichrichtung (25) ein Steuermittel (29) umfasst, das mittelbar oder unmittelbar das Sperrmittel (26) in den Sperrzustand (28) und/oder in den Freigabezustand (27) versetzt, wobei die Sperreinrichtung (25) derart eingerichtet ist, dass der Sperrzustand (28) und/oder der Freigabezustand (27) in Abhängigkeit eines Kontakts und/oder eines nicht-Kontakts eines Kontaktabschnitts (30) des Steuerungsmittels mit einem Gegenkontaktabschnitt (31) der Vorratseinheit (5), insbesondere ist der Gegenkontaktabschnitt (31) an wenigstens einer Aufnahmeeinrichtung (19, 19') der Vorratseinheit (5), vorliegt, bevorzugt besteht der Freigabezustand (27) bei Vorliegen eines Kontakts des steuermittelseitigen Kontaktabschnitts (30) mit einem vorratseinheitsseitigen Gegenkontaktabschnitts (31) und/oder besteht der Sperrzustand (28) zumindest bei nicht Vorliegen eines Kontakts bzw. bei Beabstandung des Kontaktabschnitts (30) und des Gegenkontaktabschnitts (31).

11. Werkstückträgerwechselsystem (1) nach Anspruch 9 oder 10, **dadurch gekennzeichnet, dass** die Sperreinrichtung (25) ein Vorspannmittel umfasst, welches das Sperrmittel (26) mit einer Vorspannkraft (32) in den Sperrzustand (28) und/oder in den Freigabezustand (27) vorspannt, vorzugsweise ist die Sperreinrichtung (25) eingerichtet, dass bei Vorliegen eines Kontakts des steuerungsmittelseitigen Kontaktabschnitts (30) und des vorratseinheitsseitigen Gegenkontaktabschnitts (31) eine Freigabekraft, insbesondere eine Druckkraft, vorliegt, welche, insbesondere der Vorspannkraft (32) entgegenwirkend, das Sperrmittel (26) in den Freigabezustand (27) versetzt.

12. Werkstückträgerwechselsystem (1) nach einem der Ansprüche 9 bis 11, **dadurch gekennzeichnet, dass** das Steuermittel (29)
- im Freigabezustand (27) des Sperrmittels (26) in einem elastisch ausgelenkten Zustand vorliegt und/oder dass
- im Sperrzustand (28) des Sperrmittels (26) in einem elastisch ausgelenkten Zustand vorliegt,
bevorzugt liegt im Freigabezustand (27) des Sperrmittel (26)s eine höhere Rückstellkraft aufgrund des ausgelenkten Zustands des Steuermittel (29)s vor als im Sperrzustand (28).

13. Werkstückträger (3, 3') für ein Werkstückträgerwechselsystem (1) nach einem der vorhergehenden Ansprüche, **dadurch gekennzeichnet, dass** der Werkstückträger (3, 3') eine Sperrmittelgegenstruktur (33) umfasst, die eingerichtet ist, während einer Sperrposition des trageinrichtungsseitigen Sperrmittel (26)s eine Relativbewegung von Werkstückträger (3, 3') und Trageinrichtung (12) sperrt,

14. Bearbeitungsanlage (2) zum materialentfernenden Bearbeiten eines Werkstücks (4), insbesondere zur Herstellung von Dentalteilen, mit einer Bearbeitungseinheit (34) umfassend wenigstens ein Werkzeug (35) zum materialentfernenden Bearbeiten eines in einem Arbeitsbereich befindlichen Werkstücks (4), **dadurch gekennzeichnet, dass** die Bearbeitungsanlage (2) ein Werkstückträgerwechselsystem (1) nach einem der Ansprüche 1 bis 12 aufweist.

15. Verfahren zum Wechsel eines Werkstückträgers (3) unter Verwendung eines Werkstückträgerwechselsystem (1) nach einem der Ansprüche 1 bis 12.
